# EUROPÄISCHE PATENTSCHRIFT

(11) **EP 4 256 226 B1**
(45) Veröffentlichungstag und Bekanntmachung des Hinweises auf die Patenterteilung: **04.06.2025**
(21) Anmeldenummer: 21802282.0
(22) Anmeldetag: 28.10.2021
(51) Int. Cl.: F17C 13/12

(54) **SICHERHEITSVENTIL UND TANK**
SAFETY VALVE AND TANK
SOUPAPE DE SÉCURITÉ ET RÉSERVOIR

(30) Priorität: 04.12.2020 DE 102020215381
(43) Veröffentlichungstag der Anmeldung: 11.10.2023
(73) Patentinhaber: Robert Bosch GmbH, 70442 Stuttgart (DE)
(72) Erfinder: HAMADA, Raed, 70499 Stuttgart (DE); MUEHLEDER, Friedrich, 75417 Muehlacker (DE)
(86) Internationale Anmeldenummer: PCT/EP2021/079990
(87) Internationale Veröffentlichungsnummer: WO 2022/117267

(56) Entgegenhaltungen:
- DE-T2- 60 309 339
- DE-T2- 69 618 127
- FR-A1- 3 008 767
- US-A1- 2013 082 054

## Beschreibung

### Technisches Gebiet

Die vorliegende Erfindung betrifft ein Sicherheitsventil und einen Tank, insbesondere für ein Kraftfahrzeug.

### Stand der Technik

Wasserstoff gewinnt als Energieträger zunehmend an Bedeutung. Wasserstoff oder Gase im Allgemeinen sind üblicherweise in geschlossenen Behältern bei einem Druck größer dem Umgebungsdruck gespeichert. Die Behälter sind dabei üblicherweise mit Sicherheitsventilen versehen, um ein kontrolliertes Ablassen des Gases zu ermöglichen, wenn der Druck im Inneren des Behälters einen Grenzwert überschreitet oder wenn dies aus anderen Gründen, wie z.B. im Brandfall, erforderlich ist.

In der US 5 632 297 A wird beispielsweise ein Sicherheitsventil beschrieben, das sowohl im Überdruckfall als auch bei Erreichen einer Grenztemperatur auslöst. Das Sicherheitsventil umfasst einen Ventilkörper mit einer Bohrung, an deren Boden eine erste Öffnung ausgebildet ist und an deren Seitenumfang beabstandet zum Boden eine zweite Öffnung ausgebildet ist, einen in der Bohrung geführten Kolben, eine Druckfeder, ein Anschlagstück und einen bei der Grenztemperatur schmelzenden Pfropfen. Die Druckfeder stützt sich an dem Kolben und an dem Anschlagstück ab. Das Anschlagstück liegt seinerseits an dem Pfropfen an, so dass die Feder den Kolben dichtend an die erste Öffnung drückt. Wenn der Propfen schmilzt, drückt die durch die Feder über das Anschlagstück ausgeübte Kraft sowie eine durch Gas auf den Kolben ausgeübte Kraft das Material des Pfropfens weg, so dass der Kolben durch das Gas von der ersten Öffnung abgehoben werden kann.

Aus der DE 696 18 127 T2 ist eine Entlastungsvorrichtung (relief device) bekannt, die entweder thermisch oder durch Druck aktiviert wird, um einen Druck in einem unter Druck stehenden Behälter freizugeben, wenn eine vorbestimmte Temperatur oder ein solcher Druck in dem oder um den Behälter überschritten wird.

In der DE 603 09 339 T2 sind Entlastungseinrichtungen und insbesondere Entlastungsventile, gezeigt, die eine Druckentlastung für ein druckbeaufschlagtes Fluid in einem Behälter oder einem Kanister bereitstellen, wenn eine vorbestimmte Temperatur oder ein vorbestimmter Druck überschritten wird.

Aus der FR 3 008 767 A1 ist ein Ventil zum Ablassen eines Gases bekannt, mit einem Kanal, der ein Element umfasst, das sich zwischen einer ersten Position, die den Gasfluss verhindert, einer zweiten Position, die einen Gasfluss über einen ersten Durchlassabschnitt ermöglicht, und einer dritten Position, die einen Gasfluss über einen zweiten Durchlassabschnitt ermöglicht, bewegt, wobei der zweite Durchgangsabschnitt eine andere Oberfläche als die Oberfläche des ersten Strömungsabschnitts aufweist, wobei die Vorrichtung eine erste und eine zweite Schubsicherungen aufweist, wobei der erste Anschlag eine Schmelzsicherung aufweist

Aus der US 2013/082054 A1 ist eine Sicherheitseinrichtung für durch Gasdruck belastete Behaelter, insbesondere die Gasseite hydropneumatischer Einrichtungen wie Hydrospeicher, bekannt. Diese Sicherheitseinrichtung ist dadurch gekennzeichnet, dass sie eine am Druckraum des Behaelters anbringbare Anschlusseinrichtung zur Bildung eines Durchganges zwischen Gasseite des Behälters und der Aussenseite aufweist und dass ein den Durchgang normalerweise sperrendes Mittel vorhanden ist, das unter Temperatureinfluss in einen Zustand ueberfuehrbar ist, der die Freigabe eines Stroemungsweges durch den Durchgang ermoeglicht.

### Offenbarung der Erfindung

Erfindungsgemäß sind ein Sicherheitsventil mit den Merkmalen des Anspruchs 1 sowie ein Tank mit den Merkmalen des Anspruchs 10 vorgesehen.

Gemäß einem ersten Aspekt der Erfindung ist ein Sicherheitsventil vorgesehen, insbesondere für einen Gastank. Das Sicherheitsventil umfasst einen Ventilkörper mit einer eine Längsachse definierenden Führungsbohrung, einer an einem Boden der Führungsbohrung ausgebildeten ersten Öffnung und einer entlang der Längsachse beabstandet von dem Boden ausgebildeten zweiten Öffnung, welche sich entlang einer quer zur Längsachse erstreckenden radialen Richtung erstreckt, eine in der Führungsbohrung des Ventilkörpers axial verschiebbar gelagerte Ventilnadel mit einer der ersten Öffnung zugewandten Dichtfläche, eine Druckfedereinrichtung mit einer Feder, welche um einen Vorspannweg, insbesondere gegenüber einem unbelasteten Zustand oder gegenüber einem Zustand, in dem die Feder an einem Anschlag anliegt, komprimiert ist und dadurch die Ventilnadel entlang der Längsachse in eine Dichtposition vorspannt, in welcher die Dichtfläche der Ventilnadel die erste Öffnung abdichtet, und eine thermisch aktivierbare Auslöseeinheit, welche eine Ausdehnung oder Länge entlang der Längsachse aufweist, die größer ist, als der Vorspannweg, und welche dazu ausgebildet ist, bei Erreichen einer Auslösetemperatur zu kollabieren, wobei die Druckfedereinrichtung sich gegen die Auslöseeinheit abstützt. Dabei kann das Sicherheitsventil eine Verriegelungseinrichtung mit einem Verriegelungskörper, welcher in einer sich in der radialen Richtung erstreckenden Verriegelungsausnehmung des Ventilkörpers verschiebbar gelagert ist, und einer Feder aufweisen, welche den Verriegelungskörper in der radialen Richtung zu der Längsachse hin vorspannt, wobei die zweiten Öffnung des Ventilkörpers in Bezug auf die Längsachse zwischen der Verriegelungsausnehmung und dem Boden angeordnet ist, und wobei die Ventilnadel eine Verriegelungsnut aufweist, welche in der Dichtposition der Ventilnadel zwischen der Verriegelungsausnehmung und dem Boden des Ventilkörpers in einem vorbestimmten Abstand zu der Verriegelungsausnehmung positioniert ist, und wobei der Verriegelungskörper in einer Verriegelungsposition, in welcher er in die Führungsbohrung hineinragt, in die Verriegelungsnut eingreift, wenn die Ventilnadel um den vorbestimmten Abstand von der ersten Öffnung zurückgezogen ist. Demnach ist ein Rastmechanismus vorgesehen, welcher den Ventilkörper in einer Freigabeposition axial fixiert, wobei in der Freigabeposition des Ventilkörpers die Dichtfläche beabstandet von dem Boden der Führungsbohrung und die Verriegelungsnut in Bezug auf die Längsachse auf dem Niveau der Verriegelungsbohrung angeordnet ist. Somit wird zuverlässig verhindert, dass die Dichtfläche wieder in Anlage an den Boden der Führungsbohrung kommt und die erste Öffnung abdichtet, wenn die Ventilnadel um einen dem Abstand zwischen Verriegelungsbohrung und Verriegelungsnut in der Dichtposition der Ventilnadel entsprechenden Hub angehoben wird, z.B. wenn die Auslöseeinheit kollabiert ist. Dadurch wird ein irreversibler Öffnungs- bzw. Ablassvorgang sichergestellt und somit die Zuverlässigkeit des Ventils weiter verbessert.

Gemäß einem zweiten Aspekt der Erfindung ist ein Tank, insbesondere für ein Kraftfahrzeug, vorgesehen. Der Tanke weist einen Behälter zur Aufnahme eines Gases, insbesondere zur Aufnahme von Wasserstoff, und ein Sicherheitsventil nach dem ersten Aspekt der Erfindung auf.

Eine der Erfindung zugrundeliegende Idee besteht darin, in einem Sicherheitsventil, das sowohl bei Überschreiten eines Grenzdrucks als auch bei Überschreiten einer Grenztemperatur auslöst, eine Dimensionierung einer Auslöseeinheit, die bei Erreichen der Grenztemperatur kollabiert, und einen Vorspannweg einer Feder so aufeinander abzustimmen, dass, wenn die Auslöseeinheit kollabiert ist, die Ventilnadel des Sicherheitsventils, die die Öffnung zum Behälter abdichtet, frei axial bewegbar ist, insbesondere ohne Beaufschlagung durch eine Federkraft. In dem erfindungsgemäßen Sicherheitsventil ist eine Feder einer Druckfedereinrichtung um einen bestimmten Vorspannweg komprimiert. Das heißt, die Feder ist gegenüber dem entspannten Zustand oder gegenüber einem Zustand, in welchem sie sich an zwei axial entgegengesetzten Anschlägen abstützt, um einen bestimmten Weg zusammengedrückt. Die Ventilnadel wird durch die Federkraft in die Dichtposition vorgespannt. Hierbei stützt die Auslöseeinheit sich an der Ventilnadel und der Druckfedereinrichtung ab und die Druckfedereinrichtung stützt sich an einem Anschlag des Ventilkörpers ab. Alternativ stützt sich die Druckfedereinrichtung direkt an der Ventilnadel und an der Auslöseeinheit ab, welche sich ihrerseits an einem Anschlag des Ventilkörpers abstützt. In beiden Fällen ist die Auslöseeinheit länger als der Vorspannweg der Feder. Das heißt, die Auslöseeinheit ist derart gestaltet, dass sie, wenn sie, z.B. bricht, einen Weg freigibt, der länger als der Vorspannweg ist. Dadurch werden die Feder und die Ventilnadel kinematisch entkoppelt und die Ventilnadel wird in axialer Richtung freigegeben.

Durch diese Gestaltung wird im Falle einer temperaturbedingten Auslösung die Dichtposition der Ventilnadel mit verbesserter Zuverlässigkeit freigegeben. Insbesondere wird die Kraft, die das durch die erste Öffnung des Ventilkörpers strömende Gas auf den Ventilkörper aufbringen muss, um diesen aus der Dichtposition zu entfernen, vorteilhaft verringert, da keine Federkraft mehr überwunden werden muss. Somit wird die Sicherheit des Ventils weiter verbessert.

Gemäß manchen Ausführungsformen kann vorgesehen sein, dass der Verriegelungskörper eine Kugel ist. Dies bietet vorteilhaft eine konstruktiv einfache Lösung.

Gemäß manchen Ausführungsformen kann vorgesehen sein, dass die Druckfedereinrichtung eine Federhülse mit einem Boden und einem entgegengesetzt zu diesem gelegenen Bund aufweist, und die Feder als eine Spiralfeder ausgebildet ist, welche sich an dem Bund der Federhülse und einem in Bezug auf die Längsachse entgegengesetzt zu dem Boden der Führungsbohrung und ortsfest relativ zu diesem angeordneten Anschlag abstützt, und wobei die Auslöseeinheit sich am Boden der Federhülse und an einem entgegengesetzt zu der Dichtfläche gelegenen Ende der Ventilnadel abstützt. Die Federhülse kann beispielsweise einen Hülsenkörper aufweisen, wobei der Boden an einem ersten Ende des Hülsenkörpers angeordnet ist, und der Bund, welcher in einer radialen Richtung nach außen von dem Hülsenkörper vorsteht, an einem zweiten Ende des Hülsenkörpers angeordnet ist. Die Federhülse ist vorzugsweise derart in dem Ventilkörper positioniert, dass der Bund in Bezug auf die Längsachse dem Boden der Führungsbohrung zugewandt ist. Der Anschlag, an dem sich die Feder abstützt, kann beispielsweise durch einen Schraubdeckel, der mit dem Ventilkörper verschraubt ist, ausgebildet sein. Eine Spiralfeder bietet den Vorteil, dass diese kostengünstig herstellbar ist und gleichzeitig deren Vorspannung sehr präzise einstellbar ist. Die Anordnung der Auslöseeinheit derart, dass diese sich an der Ventilnadel und dem Boden der Hülse abstützt, bedingt, dass die Auslöseeinheit in den Hülsenkörper hineinragt. Somit wird ein in axialer Richtung kompakter Aufbau erzielt. Gleichzeitig ist die Feder durch die Federhülse räumlich von der Auslöseeinheit getrennt, so dass gegenseitigen Funktionsbeeinträchtigungen vorgebeugt wird.

Gemäß manchen Ausführungsformen kann vorgesehen sein, dass der Ventilkörper eine Schulterfläche aufweist, welche ein entgegengesetzt zu dem Boden der Führungsbohrung gelegenes Ende der Führungsbohrung in Bezug auf die radiale Richtung umgibt, wobei der Bund der Federhülse der Schulterfläche zugewandt und beabstandet zu der Schulterfläche angeordnet ist, und wobei der Bund durch die Feder an die Schulterfläche angelegt ist, wenn die Auslöseeinheit kollabiert ist. Die Führungsbohrung kann beispielsweise in ein Plenum oder einen Hohlraum des Ventilkörpers münden, in welchem die Federhülse und die Spiralfeder angeordnet sind. Der Ventilkörper weist eine Schulter- oder Anschlagfläche auf, welche das Plenum in Bezug auf die Längsachse begrenzt und von der aus sich die Führungsbohrung erstreckt. Wenn die Auslöseeinheit kollabiert, drückt die Feder die Federhülse gegen die Anschlag- oder Schulterfläche. Somit wird eine weitere Bewegung der Federhülse in Richtung des Ventilkörpers durch die Schulterfläche gestoppt und dadurch noch zuverlässiger verhindert, dass der Ventilkörper ungewollt in die Dichtposition gedrückt wird, wenn die Auslöseeinheit kollabiert ist.

Gemäß manchen Ausführungsformen kann vorgesehen sein, dass ein Außendurchmesser der Ventilnadel und ein Innendurchmesser der Federhülse derart dimensioniert sind, dass die Ventilnadel zumindest teilweise in die Federhülse einführbar ist, wenn die Auslöseeinheit kollabiert ist. Somit kann die Ventilnadel nach dem Kollabieren der Auslöseeinheit zumindest teilweise in der Federhülse aufgenommen werden. Dadurch wird einerseits ein kompakter Aufbau erzielt. Andererseits wird dadurch die kinematische Entkopplung von Druckfedereinrichtung und Ventilnadel nach dem Kollabieren der Auslöseeinheit weiter erleichtert.

Gemäß manchen Ausführungsformen kann vorgesehen sein, dass die Druckfedereinrichtung einen Federträger aufweist und die Feder als eine Tellerfeder ausgebildet ist, welche mit dem Federträger verbunden ist und sich an einem entgegengesetzt zu der Dichtfläche gelegenen Ende der Ventilnadel abstützt, wobei die Auslöseeinheit sich an dem Federträger und einem in Bezug auf die Längsachse entgegengesetzt zu dem Boden der Führungsbohrung und ortsfest relativ zu diesem angeordneten Anschlag abstützt. Der Federträger kann beispielsweise im Wesentlichen plattenförmig ausgebildet sein. Eine Tellerfeder bietet den Vorteil, dass diese in Bezug auf die axiale Richtung sehr kompakt ist. Beispielsweise kann die Tellerfeder in Bezug auf die Längsachse im entspannten Zustand eine Erstreckung aufweisen, welche in einem Bereich zwischen 5 % und 20 %, insbesondere zwischen 7 % und 12 % der Länge der Auslöseeinheit liegt. Somit wird die kinematische Entkopplung von Druckfedereinrichtung und Ventilnadel nach dem Kollabieren der Auslöseeinheit auf konstruktiv sehr einfache Weise sichergestellt.

Gemäß manchen Ausführungsformen kann vorgesehen sein, dass der Ventilkörper ein Außengewinde aufweist, mit dem der Ventilkörper in eine Öffnung eines Behälters einschraubbar ist. Somit wird eine zuverlässige Kopplung des Sicherheitsventils an einen Behälter erleichtert.

Gemäß manchen Ausführungsformen kann vorgesehen sein, dass die Auslöseeinheit eine mit einer Flüssigkeit gefüllte Glasampulle aufweist. Die Glasampulle kann allgemein ein länglicher, z.B. zylinderförmiger Hohlkörper sein, in welchem eine Flüssigkeit aufgenommen ist. Die Glasampulle ist hermetisch verschlossen und eine Wandstärke der Glasampulle ist derart dimensioniert, dass sie kollabiert oder zerbirst, wenn sich die Flüssigkeit infolge steigender Temperaturen ausdehnt, dass ein Druck im Inneren der Glasampulle einen Grenzwert überschreitet. Diese Lösung bietet den Vorteil, dass eine Auslöseeinheit mit relativ großer axialer Erstreckung realisierbar ist. Dennoch kann eine Grenztemperatur, bei der die Auslöseeinheit kollabieren soll, sehr präzise eingestellt werden, z.B. durch die Wandstärke der Glasampulle und/oder durch die Eigenschaften und/oder die Menge der Flüssigkeit. Ein weiterer Vorteil liegt darin, dass die Flüssigkeit nach dem Kollabieren der Glasampulle die Funktion bzw. die Bewegbarkeit der Ventilnadel nicht beeinflusst. Im Gegensatz zu Propfen aus einem schmelzbaren Material, bei denen die Gefahr besteht, dass das geschmolzene Material im Ventilkörper wieder erstarrt, müssen auch keine Maßnahmen getroffen werden, um das Material bzw. die Flüssigkeit aus dem Ventilkörper herauszubefördern. Dies erleichtert die Anordnung der Auslöseeinheit innerhalb des Ventilkörpers.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "entlang" einer anderen Achse, Richtung oder Struktur verstanden, dass diese, insbesondere die sich in einer jeweiligen Stelle der Strukturen ergebenden Tangenten jeweils in einem Winkel von kleiner 45 Grad, bevorzugt kleiner 30 Grad und insbesondere bevorzugt parallel zueinander verlaufen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "quer" zu einer anderen Achse, Richtung oder Struktur verstanden, dass diese, insbesondere die sich in einer jeweiligen Stelle der Strukturen ergebenden Tangenten jeweils in einem Winkel von größer oder gleich 45 Grad, bevorzugt größer oder gleich 60 Grad und insbesondere bevorzugt senkrecht zueinander verlaufen.

Im Folgenden wird die Erfindung unter Bezugnahme auf die Figuren der Zeichnungen erläutert. Von den Figuren zeigen:
- Fig. 1: eine schematische Schnittansicht eines Sicherheitsventils gemäß einem Ausführungsbeispiel der vorliegenden Erfindung, wobei eine Ventilnadel in einer Dichtposition angeordnet ist und das Sicherheitsventil in einer Öffnung eines Behälters fixiert ist;
- Fig. 2: das Sicherheitsventil aus Fig. 1, wobei eine Auslöseeinheit kollabiert und die Ventilnadel in einer Freigabeposition angeordnet ist;
- Fig. 3: eine Detailansicht des durch den Buchstaben Z gekennzeichneten Bereichs des in der Fig. 2 gezeigten Sicherheitsventils;
- Fig. 4: eine schematische Schnittansicht eines Sicherheitsventils gemäß einem weiteren Ausführungsbeispiel der vorliegenden Erfindung, wobei eine Ventilnadel in einer Dichtposition angeordnet ist und das Sicherheitsventil in einer Öffnung eines Behälters fixiert ist; und
- Fig. 5: das Sicherheitsventil aus Fig. 4, wobei eine Auslöseeinheit kollabiert und die Ventilnadel in einer Freigabeposition angeordnet ist.

In den Figuren bezeichnen dieselben Bezugszeichen gleiche oder funktionsgleiche Komponenten, soweit nichts Gegenteiliges angegeben ist.

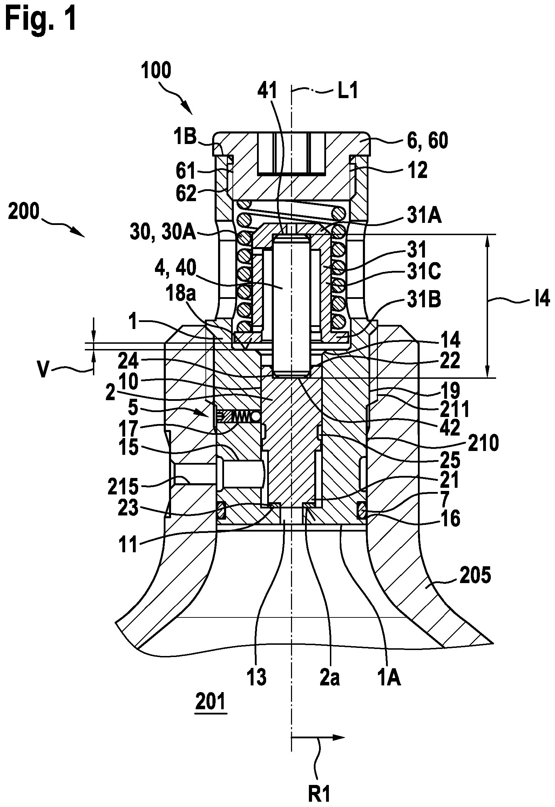

Fig. 1 zeigt beispielhaft einen Tank 200 mit einem Behälter 205 zur Aufnahme eines Gases wie z.B. Wasserstoff und einem Sicherheitsventil 100. Der Tank 200 kann beispielsweise in einem Kraftfahrzeug (nicht gezeigt) oder einem anderen Fahrzeug, z.B. einem Schiff oder einem Luftfahrzeug, mitgeführt werden. Wie in Fig. 1 beispielhaft gezeigt, weist der Behälter 205 eine Öffnung 210 auf, in welcher das Sicherheitsventil 100 fixiert ist. Beispielsweise kann die Öffnung 210 mit einem Innengewinde 211 versehen sein, in welches das Sicherheitsventil 100 mit einem an einem Außenumfang eines Ventilkörpers 1 des Ventils 100 vorgesehenen Außengewinde 19 eingeschraubt ist, wie dies in Fig. 1 beispielhaft gezeigt ist.

Wie in Fig. 1 beispielhaft gezeigt, weist das Sicherheitsventil 100 einen Ventilkörper 1, eine Ventilnadel 2, eine Druckfedereinrichtung 3 und eine Auslöseeinheit 4 auf. Optional kann ferner eine Verriegelungseinrichtung 5 vorgesehen sein, wie dies in Fig. 1 beispielhaft gezeigt ist. Ebenfalls optional kann eine Verschlusskappe 60 vorgesehen sein.

Wie in Fig. 1 schematisch gezeigt, kann der Ventilkörper 1 ein länglicher Körper sein, welcher sich zwischen einem ersten Ende 1A und einem zweiten Ende 1B erstreckt. Wie in Fig. 1 gezeigt, weist der Ventilkörper 1 eine eine Längsachse L1 definierenden Führungsbohrung 10 auf. Eine radiale Richtung R1 erstreckt sich senkrecht zu der Längsachse L1. Der Ventilkörper 1 kann beispielsweise einen sich entlang der Längsachse L1 erstreckenden Hohlraum definieren, welcher einseitig durch eine sich quer zur Längsachse L1 erstreckenden Schulterfläche 18a begrenzt ist und am zweiten Ende 1B des Ventilkörpers 1 eine Endöffnung 12 aufweist. Wie dies in Fig. 1 beispielhaft gezeigt ist, kann die Führungsbohrung 10 sich von der Schulterfläche 18a aus als Sackloch erstrecken. Die Führungsbohrung 10 erstreckt sich somit zwischen einem im Bereich des ersten Endes 1A des Ventilkörpers 1 gelegenen Boden 11 und einer entgegengesetzten Bohrungsöffnung 14. Die Anschlagfläche oder Schulterfläche 18a umgibt somit ein entgegengesetzt zu dem Boden 11 der Führungsbohrung 11 gelegenes Ende der Führungsbohrung 10 in Bezug auf die axiale Richtung R1.

Wie in Fig. 1 ferner beispielhaft gezeigt ist, weist der Ventilkörper 1 eine erste Öffnung 13 auf, die an dem Boden 11 der Führungsbohrung 10 ausgebildet ist, und eine zweite Öffnung 15, die sich entlang der radialen Richtung R1 erstreckt und entlang der Längsachse L1 beabstandet zu der ersten Öffnung 13 bzw. zum Boden 11 der Führungsbohrung 10 angeordnet ist. Wie in Fig. 1 gezeigt, erstreckt sich die erste Öffnung 13 zwischen dem Boden 11 und dem ersten Ende 1A bzw. einer das erste Ende 1A bildenden Stirnfläche des Ventilkörpers 1. Die zweite Öffnung 15 erstreckt sich zwischen einer die Führungsbohrung 10 definierenden Innenumfangsfläche und einer in Bezug auf die radiale Richtung R1 entgegengesetzt zu dieser gelegenen Außenumfangsfläche des Ventilkörpers 1.

Wie in Fig. 1 ferner beispielhaft gezeigt ist, kann der Ventilkörper 1 ferner eine optionale Verriegelungsausnehmung 17 aufweisen, welche sich zwischen der Innenumfangsfläche und der Außenumfangsfläche des Ventilkörpers 1 erstreckt. Wie in Fig. 1 beispielhaft gezeigt, kann die Verriegelungsausnehmung 17 derart positioniert sein, dass die zweite Öffnung 15 des Ventilkörpers 1 in Bezug auf die Längsachse L1 zwischen der Verriegelungsausnehmung 17 und dem Boden 11 angeordnet ist.

Wie bereits erwähnt, kann der Ventilkörper 1 optional ein an seiner Außenumfangsfläche ausgebildetes Außengewinde 19 aufweisen. Wie in Fig. 1 beispielhaft gezeigt, kann das Außengewinde 19 in einem zwischen dem ersten und dem zweiten Ende 1A, 1B gelegenen Mittelbereich ausgebildet sein.

Wenn das Sicherheitsventil 100 in der Öffnung 210 des Behälters 200 fixiert ist, z.B. indem das Außengewinde 19 des Ventilkörpers 1 mit dem Innengewinde 211 der Öffnung 210 des Behälters 200 verschraubt ist, wie in Fig. 1 beispielhaft gezeigt, ist das erste Ende 1A des Ventilkörpers 1 und damit die erste Öffnung **11** des Ventilkörpers 1 einem Innenraum 201 des Behälters 200 zugewandt, wie in Fig. 1 gezeigt. Ferner kann die zweite Öffnung 15 des Ventilkörpers 1 fluchtend zu einer Seitenöffnung 215 des Behälters 200 angeordnet sein, wie in Fig. 1 gezeigt.

Wie in Fig. 1 ferner beispielhaft gezeigt ist, kann der Ventilkörper 1 im Bereich des ersten Endes 1A eine an der Außenumfangsfläche ausgebildete Umfangsnut 16 aufweisen, in welcher ein Dichtring 7 aufgenommen ist. Wie in Fig. 1 beispielhaft gezeigt, kann der Dichtring 7 an einer Innenfläche des Behälters 205, insbesondere der Öffnung 210 anliegen.

Die optionale Verschlusskappe 60 kann beispielsweise mittels eines Außengewindes 61 in ein Innengewinde 62 eingeschraubt sein, welches im Bereich des zweiten Endes 1B in der Öffnung 12 des Ventilkörpers 1 ausgebildet ist, wie in Fig. 1 beispielhaft gezeigt.

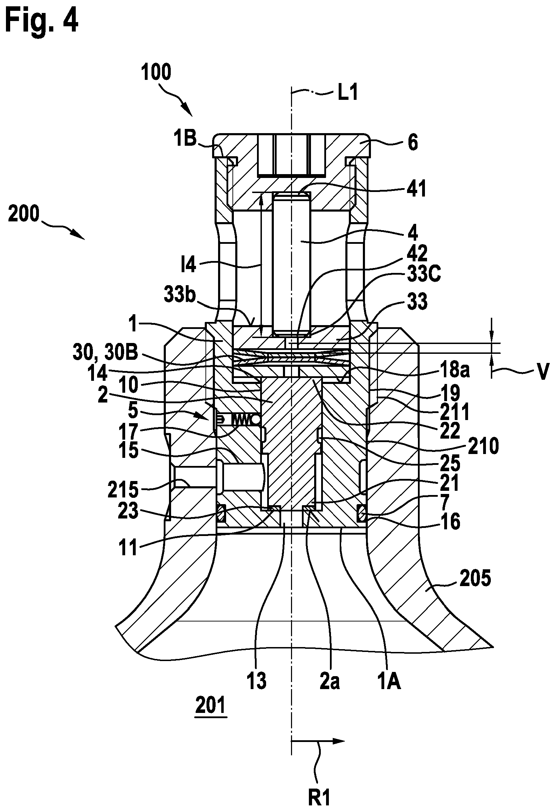

Die Ventilnadel 2 kann insbesondere als ein Kolben ausgebildet sein, welcher zwischen einem ersten Ende 21 und einem zweiten Ende 22 erstreckt, wie dies in Fig. 1 beispielhaft gezeigt ist. An dem ersten Ende 21 weist die Ventilnadel 2 eine Dichtfläche 2a auf, welche z.B. durch eine Stirnfläche der Ventilnadel 2 selbst oder, wie in Fig. 1 beispielhaft gezeigt, durch einen mit der Stirnfläche 2a verbundenen Dichtbelag 23 gebildet sein, welcher z.B. aus einem Elastomermaterial gebildet sein kann. An dem zweiten Ende 22 kann eine Vertiefung 24 ausgebildet sein, wie dies in Fig. 1 beispielhaft gezeigt ist. Alternativ kann die das zweite Ende 22 bildende Stirnfläche auch eben sein, wie dies in Fig. 4 beispielhaft gezeigt ist.

Die Ventilnadel 2 kann ferner optional eine Verriegelungsnut 25 aufweisen, welche beabstandet zu dem ersten Ende 21 an einer Außenumfangsfläche des Kolbens ausgebildet ist, wie dies in Fig. 1 beispielhaft dargestellt ist.

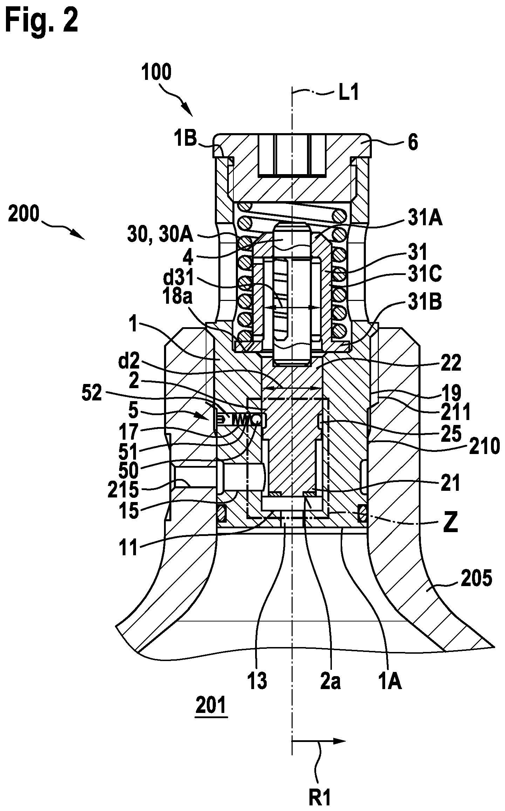

Wie in Fig. 1 beispielhaft gezeigt, ist die Ventilnadel 2 in der Führungsbohrung 10 des Ventilkörpers 1 entlang der Längsachse L1 verschiebbar geführt. Die Dichtfläche 2a der Ventilnadel 2 ist dem Boden 11 der Führungsbohrung 10 zugewandt orientiert. In Fig. 1 ist die Ventilnadel 2 in einer Dichtposition gezeigt, in welcher die Dichtfläche 2a am Boden 11 der Führungsbohrung 10 anliegt. In einer Freigabeposition, welche beispielhaft in Fig. 2 gezeigt ist, ist die Dichtfläche 2a beabstandet zu dem Boden 11 der Führungsbohrung 10 angeordnet und gibt die erste Öffnung 13 frei, so dass Gas durch die erste Öffnung 13 in die Führungsbohrung 10 und aus dieser durch die zweite Öffnung 15 ausströmen kann.

Die Druckfedereinrichtung 3 weist eine Feder 30 auf und kann ferner eine Federhülse 31 umfassen, wie dies in Fig. 1 beispielhaft gezeigt ist. Die Feder 30 kann, wie in Fig. 1 gezeigt, beispielsweise eine Spiralfeder 30A sein. Wie in Fig. 1 beispielhaft gezeigt, kann die Federhülse 31 einen Hülsenkörper 31C aufweisen, wobei an einem ersten Ende des Hülsenkörpers eine Boden 31A und an einem entgegengesetzt zu diesem gelegenen zweiten Ende ein radial nach außen von dem Hülsenkörper 31C vorstehender Bund 31B ausgebildet ist. Der Bund 31B ist der Schulterfläche 18a bzw. dem Boden 11 der Führungsbohrung 10 zugewandt gelegen.

Wie in Fig. 1 gezeigt, kann die Druckfedereinrichtung 3 in dem Innenraum oder Plenum des Ventilkörpers 1 zwischen der Schulterfläche 18a und der Endöffnung 12 angeordnet sein. Wie in Fig. 1 beispielhaft dargestellt, kann der Hülsenkörper 31C in die Spiralfeder 30A eingeführt sein, wobei sie die Spiralfeder 30A an dem Bund 31B und an der Verschlusskappe 60 oder einem anderen Anschlag 6 anliegt, welcher ortsfest in Bezug auf den Ventilkörper 1, insbesondere in Bezug auf den Boden 11 der Führungsbohrung 10 ist.

Die Auslöseeinheit 4 ist thermisch aktivierbar ausgebildet, so dass sie bei Erreichen oder Überschreiten einer Grenztemperatur kollabiert. Beispielsweise kann die Auslöseeinheit 4 eine mit einer Flüssigkeit gefüllte Glasampulle 40 aufweisen, wie dies in Fig. 1 beispielhaft gezeigt ist. Wenn die Grenztemperatur erreicht oder überschritten wird, zerbirst die Ampulle 40 infolge eines zu hohen Drucks in ihrem Inneren, der sich durch thermische Ausdehnung der Flüssigkeit aufbaut.

Wie in Fig. 1 beispielhaft gezeigt, kann die Glasampulle 40 oder allgemein die Auslöseeinheit 4 ein länglicher, sich zwischen einem ersten Ende 41 und einem zweiten Ende 42 erstreckender Körper sein. Die Auslöseeinheit weist zwischen dem ersten und dem zweiten Ende 41, 42 eine vorbestimmte Länge oder Längsausdehnung auf. Wie in Fig. 1 gezeigt, kann die Auslöseeinheit 4 in Bezug auf die Längsachse L1 zwischen dem Boden 31A der Federhülse 31 und dem zweiten Ende 22 der Ventilnadel 2 angeordnet sein. Insbesondere stützt sich die Auslöseeinheit 4 hierbei am Boden dem Boden 31A der Federhülse 31 und an dem zweiten Ende 22 der Ventilnadel 2 ab. Beispielsweise kann das zweite Ende 42 der Auslöseeinheit 4 in der am zweiten Ende 22 der Ventilnadel 2 ausgebildeten Ausnehmung oder Vertiefung 24 aufgenommen sein. Das erste Ende 41 der Auslöseeinheit 4 kann an dem Boden 31A der Federhülse 31 anliegen und optional ebenfalls in einer entsprechenden Vertiefung aufgenommen sein, wie dies in Fig. 1 beispielhaft gezeigt ist.

In dem in Fig. 1 beispielhaft gezeigten Zustand, in dem die Auslöseeinheit 4 nicht kollabiert, sondern mechanisch intakt ist, koppelt die Auslöseeinheit 4 die Druckfedereinrichtung 3 kinematisch an die Ventilnadel 2. Insbesondere ist die Feder 30 um einen Vorspannweg V komprimiert, wodurch die Ventilnadel 2 entlang der Längsachse L1 in die Dichtposition vorgespannt ist. Die Ausdehnung oder Länge I4 der Auslöseeinheit 4 entlang der Längsachse L1 ist dabei größer als der Vorspannweg V der Feder 30. Der der Schulterfläche 18a zugewandte Bund 31B der Federhülse 31 ist in dem in Fig. 1 gezeigten Zustand beabstandet zu der Schulterfläche 18a angeordnet.

Wenn ein Druck im Inneren 201 des Behälters 205 einen bestimmten Grenzwert überschreitet, der groß genug ist, um die Vorspannkraft der Feder 30 zu überwinden, wird die Ventilnadel 2 axial in die Freigabeposition bewegt, so dass Gas durch die erste Öffnung 11 und die zweite Öffnung 15 und gegebenenfalls durch die Seitenöffnung 215 ausströmen kann.

Wenn die Temperatur die Auslösetemperatur der Auslöseeinheit 4 erreicht oder überschreitet, kollabiert die Auslöseeinheit 4. Dieser Zustand ist schematisch in Fig. 2 dargestellt. Durch das Kollabieren der Auslöseeinheit 4 wird die Ventilnadel 2 kinematisch von der Druckfedereinrichtung 3 entkoppelt, da die Ausdehnung oder Länge I4 der Auslöseeinheit 4 entlang der Längsachse L1 größer ist als der Vorspannweg V der Feder 30 und kann frei in der Führungsbohrung 10 axial verschoben werden. Wie in Fig. 2 ferner erkennbar ist, kann der Bund 31B durch die Feder 30 an die Schulterfläche 18a angedrückt werden, wenn die Auslöseeinheit 4 kollabiert ist. Die Schulterfläche 18 bildet somit einen Sperranschlag, welcher verhindert, dass die Hülse 31 weiter in Richtung der Ventilnadel 2 bewegt wird. Wie in Fig. 2 ferner erkennbar ist, können ein Außendurchmesser d2 der Ventilnadel 2 und ein Innendurchmesser d31 Federhülse 31 bzw. des Hülsenkörpers 31C derart dimensioniert sind, dass die Ventilnadel 2 zumindest teilweise in Federhülse 31 einführbar ist, wenn die Auslöseeinheit 4 kollabiert ist.

Fig. 2 zeigt rein beispielhaft, dass die Ventilnadel 2 in der Freigabeposition durch die optionale Verriegelungseinrichtung 5 arretiert ist. Dadurch wird verhindert, dass die Ventilnadel 2 in die Dichtposition zurückkehren kann.

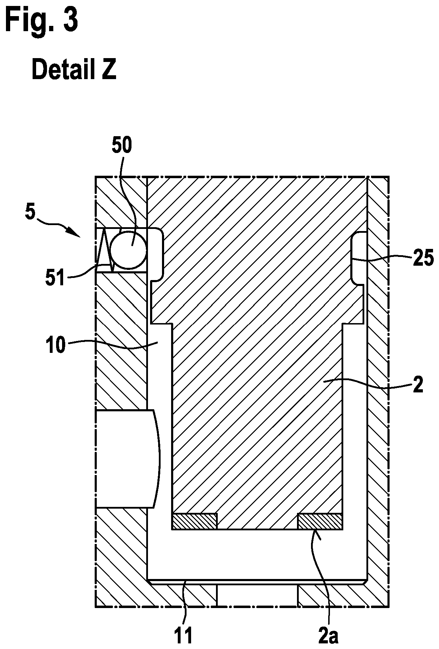

Die optionale Verriegelungseinrichtung 5 ist in Fig. 3 im Detail dargestellt. Wie in Fig. 3 beispielhaft gezeigt, weist die Verriegelungseinrichtung 5 einen Verriegelungskörper 50, welcher z.B. als Kugel ausgebildet sein kann, und eine Feder 51 auf. Der Verriegelungskörper 50 ist in der Verriegelungsausnehmung 17 des Ventilkörpers 1 verschiebbar gelagert. Die Feder 51, welche z.B. als Spiralfeder realisiert sein kann, ist ebenfalls in der Verriegelungsaunsehmung 17 aufgenommen und spannt den Verriegelungskörper 50 in Richtung der Führungsbohrung 10 bzw. in Richtung der Längsachse L1 vor. Beispielsweise kann die Feder 51 sich an einem Verschlussstück 52 abstützen, welches in die Verriegelungsausnehmung 17 am Außenumfang des Ventilkörpers 1 abdeckt, wie dies in Fig. 2 schematisch gezeigt ist.

Wie in Fig. 1 erkennbar ist, ist die Verriegelungsnut 25 der Ventilnadel 2 in einer Dichtposition der Ventilnadel 2 zwischen der Verriegelungsausnehmung 17 und dem Boden 11 des Ventilkörpers 1 in einem vorbestimmten Abstand zu der Verriegelungsausnehmung 17 positioniert. Wenn die Ventilnadel 2 in die Freigabeposition zurückgezogen ist, so dass die Dichtfläche 2a um den vorbestimmten Abstand vom Boden 11 der Führungsbohrung 2 positioniert ist, liegt die Verriegelungsnut 25 in Bezug auf die Längsachse L1 auf demselben Niveau wie die Verriegelungsausnehmung 17, wie dies in den Fign. 2 und 3 gezeigt ist. Die Feder 51 spannt dabei den Verriegelungskörper 50 in eine Verriegelungsposition vor, in welcher dieser in die Führungsbohrung 10 hineinragt und in die Verriegelungsnut 25 eingreift, wie dies in den Fign. 2 und 3 gezeigt ist.

In Fig. 4 ist beispielhaft ein weiteres Sicherheitsventil 100 gezeigt, das in einer Öffnung 210 eines Behälters 200 fixiert ist. Das in Fig. 4 beispielhaft gezeigte Sicherheitsventil 100 unterscheidet sich von dem in den Fign. 1 bis 3 gezeigten Sicherheitsventil 100 lediglich durch den Aufbau der Druckfedereinrichtung 3 und die Anordnung der Auslöseeinheit 4.

Wie in Fig. 4 beispielhaft gezeigt, kann die Druckfedereinrichtung 3 einen Federträger 33 aufweisen und die Feder 30 kann als eine Tellerfeder 30B ausgebildet sein. Der Federträger 33 kann beispielsweise als eine Platte realisiert sein, wobei die Tellerfeder 30B an einer ersten Oberfläche 33a des Federträgers 33 anliegt. Optional kann der Federträger 33 eine Ausnehmung 33C aufweisen, welche an einer entgegengesetzt zu der ersten Oberfläche 33a gelegenen zweiten Oberfläche 33b des Federträgers 33 ausgebildet ist, wie dies in Fig. 4 beispielhaft gezeigt ist.

Wie in Fig. 4 beispielhaft gezeigt, stützt sich die Tellerfeder 30B an dem zweiten Ende 22 der Ventilnadel 2 ab. Die Auslöseeinheit 4, welche z.B. in die Ausnehmung 33C des Federträgers 33 hineinragen kann, stützt an dem Federträger 33 und der Verschlusskappe 60 oder einem anderen in Bezug auf die Längsachse L1 entgegengesetzt zu dem Boden 11 der Führungsbohrung 10 und ortsfest relativ zu diesem angeordneten Anschlag 6 ab.

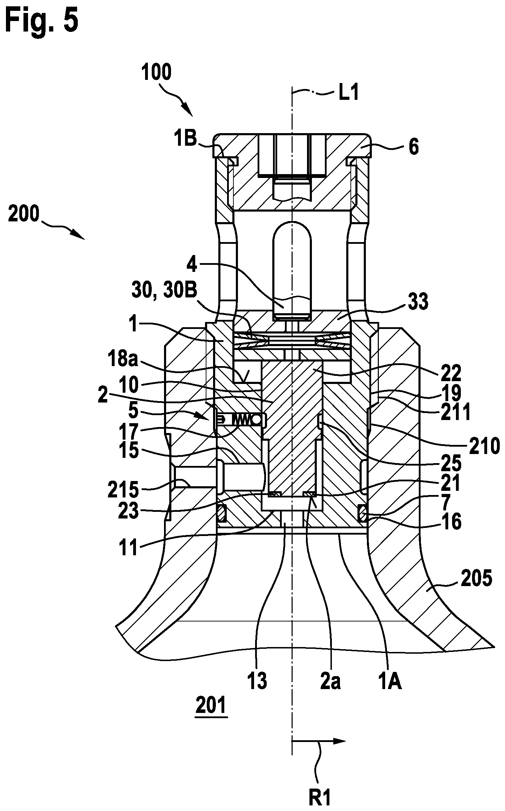

In Fig. 4 ist die Auslöseeinheit 4 mechanisch intakt und die Ventilnadel 2 ist in ihrer Dichtposition angeordnet. Die Tellerfeder 30B ist beabstandet zu der Schulterfläche 18a angeordnet und spannt die Ventilnadel 2 in die Dichtposition vor. Wenn die Auslöseeinheit 4 aufgrund einer Überschreitung der Auslösetemperatur kollabiert ist, wie dies in Fig. 5 schematisch dargestellt ist, wird die Druckfedereinrichtung 3 von der Ventilnadel kinematisch entkoppelt. In diesem Fall kann die Druckfedereinrichtung 3 frei in den Hohlraum des Ventilkörpers 1, der sich zwischen der Schulterfläche 18a und der Verschlusskappe 60 erstreckt, entweichen. Somit kann die Ventilnadel 2 ohne gegen die Vorspannkraft der Feder 30 arbeiten zu müssen in die Freigabeposition bewegt werden.

Obwohl die vorliegende Erfindung vorstehend anhand von Ausführungsbeispielen exemplarisch erläutert wurde, ist sie darauf nicht beschränkt, sondern auf vielfältige Weise modifizierbar. Insbesondere sind auch Kombinationen der voranstehenden Ausführungsbeispiele denkbar.

## Patentansprüche

1. Sicherheitsventil (100), mit:
einem Ventilkörper (1) mit einer eine Längsachse (L1) definierenden Führungsbohrung (10), einer an einem Boden (11) der Führungsbohrung (10) ausgebildeten ersten Öffnung (13) und einer entlang der Längsachse (L1) beabstandet von dem Boden (11) ausgebildeten zweiten Öffnung (15),
welche sich entlang einer quer zur Längsachse (L1) erstreckenden radialen Richtung (R1) erstreckt;
einer in der Führungsbohrung (10) des Ventilkörpers (1) axial verschiebbar gelagerten Ventilnadel (2) mit einer der ersten Öffnung (13) zugewandten Dichtfläche (2a);
einer Druckfedereinrichtung (3) mit einer Feder (30), welche um einen Vorspannweg (V) komprimiert ist und dadurch die Ventilnadel (2) entlang der Längsachse (L1) in eine Dichtposition vorspannt, in welcher die Dichtfläche (2a) der Ventilnadel (2) die erste Öffnung (13) abdichtet; und einer thermisch aktivierbaren Auslöseeinheit (4), welche eine Ausdehnung (I4) entlang der Längsachse (L1) aufweist, die größer ist, als der Vorspannweg (V), und welche dazu ausgebildet ist, bei Erreichen einer Auslösetemperatur zu kollabieren, wobei die Druckfedereinrichtung (3) sich gegen die Auslöseeinheit (4) abstützt, **dadurch gekennzeichnet, dass**
eine Verriegelungseinrichtung (5) mit einem Verriegelungskörper (50), welcher in einer sich in der radialen Richtung (R1) erstreckenden Verriegelungsausnehmung (17) des Ventilkörpers (1) verschiebbar gelagert ist, und einer Feder (51), welche den Verriegelungskörper (50) in der radialen Richtung (R1) zu der Längsachse (L1) hin vorspannt;
wobei die zweite Öffnung (15) des Ventilkörpers (1) in Bezug auf die Längsachse (L1) zwischen der Verriegelungsausnehmung (17) und dem Boden (11) angeordnet ist; und
wobei die Ventilnadel (2) eine Verriegelungsnut (25) aufweist, welche in einer Dichtposition der Ventilnadel (2) zwischen der Verriegelungsausnehmung (17) und dem Boden (11) des Ventilkörpers (1) in einem vorbestimmten Abstand zu der Verriegelungsausnehmung (17) positioniert ist, und wobei der Verriegelungskörper (50) in einer Verriegelungsposition, in welcher er in die ührungsbohrung (10) hineinragt, in die Verriegelungsnut (25) eingreift, wenn die Ventilnadel (2) um den vorbestimmten Abstand von der ersten Öffnung (13) zurückgezogen ist.

2. Sicherheitsventil (100) nach Anspruch 1, wobei der Verriegelungskörper (50) eine Kugel ist.

3. Sicherheitsventil (100) nach einem der voranstehenden Ansprüche, wobei die Druckfedereinrichtung (3) eine Federhülse (31) mit einem Boden (31A) und einem entgegengesetzt zu diesem gelegenen Bund (31B) aufweist, und die Feder (30) als eine Spiralfeder (30A) ausgebildet ist, welche sich an dem Bund (31B) der Federhülse (31) und einem in Bezug auf die Längsachse (L1) entgegengesetzt zu dem Boden (11) der Führungsbohrung (10) und ortsfest relativ zu diesem angeordneten Anschlag (6) abstützt, und wobei die Auslöseeinheit (4) sich am Boden (31A) der Federhülse (31) und an einem entgegengesetzt zu der Dichtfläche (2a) gelegenen Ende (22) der Ventilnadel (2) abstützt.

4. Sicherheitsventil (100) nach Anspruch 3, wobei der Ventilkörper (1) eine Schulterfläche (18a) aufweist, welche ein entgegengesetzt zu dem Boden (11) der Führungsbohrung (11) gelegenes Ende der Führungsbohrung (10) in Bezug auf die radiale Richtung (R1) umgibt, wobei der Bund (31B) der Federhülse (31) der Schulterfläche (18a) zugewandt und beabstandet zu der Schulterfläche (18a) angeordnet ist, und wobei der Bund (31B) durch die Feder (30) an die Schulterfläche (18a) angelegt ist, wenn die Auslöseeinheit (4) kollabiert ist.

5. Sicherheitsventil (100) nach Anspruch 3 oder 4, wobei ein Außendurchmesser (d2) der Ventilnadel (2) und ein Innendurchmesser (d31) Federhülse (31) derart dimensioniert sind, dass die Ventilnadel (2) zumindest teilweise in Federhülse (31) einführbar ist, wenn die Auslöseeinheit (4) kollabiert ist.

## Claims

1. Safety valve (100), having:
a valve body (1) with a guide bore (10) defining a longitudinal axis (L1), a first opening (13) formed at a bottom (11) of the guide bore (10), and a second opening (15) which is spaced apart from the bottom (11) along the longitudinal axis (L1) and extends along a radial direction (R1) extending transversely to the longitudinal axis (L1);
a valve needle (2) axially displaceably mounted in the guide bore (10) of the valve body (1) with a sealing surface (2a) facing the first opening (13);
a compression spring device (3) with a spring (30) which is compressed by a preloading path (V) and thereby preloads the valve needle (2) along the longitudinal axis (L1) into a sealing position, in which the sealing surface (2a) of the valve needle (2) seals the first opening (13); and a thermally activatable release unit (4), which has an extent (I4) along the longitudinal axis (L1) which is greater than the preloading path (V) and which is designed to collapse when a release temperature is reached, wherein the compression spring device (3) is supported against the release unit (4), **characterized in that** a locking device (5) with a locking body (50) which is mounted displaceably in a locking recess (17) of the valve body (1) extending in the radial direction (R1) and a spring (51) which preloads the locking body (50) in the radial direction (R1) towards the longitudinal axis (L1);
wherein the second opening (15) of the valve body (1) is arranged with respect to the longitudinal axis (L1) between the locking recess (17) and the bottom (11); and
wherein the valve needle (2) has a locking groove (25) which, in a sealing position of the valve needle (2), is positioned between the locking recess (17) and
the bottom (11) of the valve body (1) at a predetermined distance from the locking recess (17), and wherein the locking body (50) engages in the locking groove (25) in a locking position, in which it protrudes into the guide bore (10) when the valve needle (2) is pulled back by the predetermined distance from the first opening (13).

2. Safety valve (100) according to Claim 1, wherein the locking body (50) is a ball.

3. Safety valve (100) according to either of the preceding claims, wherein the compression spring device (3) has a spring sleeve (31) with a bottom (31A) and a collar (31 B) positioned opposite the latter, and the spring (30) is in the form of a spiral spring (30A), which is supported on the collar (31 B) of the spring sleeve (31) and a stop (6) arranged in relation to the longitudinal axis (L1) opposite the bottom (11) of the guide bore (10) and in a fixed position relative to said bottom, and wherein the release unit (4) is supported at the bottom (31A) of the spring sleeve (31) and at an end (22) of the valve needle (2) positioned opposite the sealing surface (2a).

4. Safety valve (100) according to Claim 3, wherein the valve body (1) has a shoulder surface (18a), which surrounds an end of the guide bore (10) opposite the bottom (11) of the guide bore (11) in relation to the radial direction (R1), wherein the collar (31B) of the spring sleeve (31) is arranged facing the shoulder surface (18a) and spaced apart from the shoulder surface (18a), and wherein the collar (31B) is positioned against the shoulder surface (18a) by the spring (30) when the release unit (4) is collapsed.

5. Safety valve (100) according to Claim 3 or 4, wherein an outer diameter (d2) of the valve needle (2) and an inner diameter (d31) of the spring sleeve (31) are dimensioned such that the valve needle (2) can at least partially be inserted into the spring sleeve (31) when the release unit (4) is collapsed.

## Revendications

1. Soupape de sécurité (100), comprenant :
un corps de soupape (1), présentant un alésage de guidage (10) définissant un axe longitudinal (L1), une première ouverture (13) formée sur un fond (11) de l'alésage de guidage (10) et une deuxième ouverture (15) formée le long de l'axe longitudinal (L1) à distance du fond (11), qui s'étend le long d'une direction radiale (R1) transversale à l'axe longitudinal (L1) ;
un pointeau de soupape (2), monté de manière à déplaçable axialement dans l'alésage de guidage (10) du corps de soupape (1) et présentant une surface d'étanchéité (2a) tournée vers la première ouverture (13) ;
un dispositif (3) à ressort de compression, comprenant un ressort (30) qui est comprimé sur une distance de précharge (V) et qui précontraint ainsi le pointeau de soupape (2) le long de l'axe longitudinal (L1) dans une position d'étanchéité dans laquelle la surface d'étanchéité (2a) du pointeau de soupape (2) ferme avec étanchéité la première ouverture (13) ; et une unité de déclenchement (4) apte à être activée thermiquement, qui présente une extension (I4) le long de l'axe longitudinal (L1) qui est plus grande que la course de précontrainte (V), et qui est conçue pour s'affaisser lorsqu'une température de déclenchement est atteinte, le dispositif (3) à ressort de compression s'appuyant contre l'unité de déclenchement (4), **caractérisée en ce qu'**un dispositif de verrouillage (5) avec un corps de verrouillage (50) qui est monté de manière déplaçable dans un évidement de verrouillage (17) du corps de soupape (1) s'étendant dans la direction radiale (R1), et un ressort (51) qui précontraint le corps de verrouillage (50) dans la direction radiale (R1) vers l'axe longitudinal (L1) ;
la deuxième ouverture (15) du corps de soupape (1) est aménagée par rapport à l'axe longitudinal (L1) entre l'évidement de verrouillage (17) et le fond (11) ; et
le pointeau (2) présente une rainure de verrouillage (25) qui, dans une position d'étanchéité du pointeau (2), est positionnée entre l'évidement de verrouillage (17) et le fond (11) du corps de soupape (1) à une distance prédéterminée de l'évidement de verrouillage (17), et le corps de verrouillage (50) vient en engagement dans la rainure de verrouillage (25) dans une position de verrouillage dans laquelle il pénètre dans l'alésage de guidage (10) lorsque le pointeau de soupape (2) est, par rapport à la première ouverture (13), rétracté de la distance prédéterminée.

2. Soupape de sécurité (100) selon la revendication 1, dans laquelle le corps de verrouillage (50) est une bille.

3. Soupape de sécurité (100) selon l'une des revendications précédentes, dans laquelle le dispositif (3) à ressort de compression comprend une douille à ressort (31) ayant un fond (31A) et une collerette (31 B) située à l'opposé de ce fond, et le ressort (30) est réalisé sous la forme d'un ressort spiral (30A) qui s'appuie sur la collerette (31 B) de la douille de ressort (31) et sur une butée (6) agencée par rapport à l'axe longitudinal (L1) à l'opposé du fond (11) de l'alésage de guidage (10) et fixe par rapport à celui-ci, et l'unité de déclenchement (4) s'appuie sur le fond (31A) de la douille à ressort (31) et sur une extrémité (22) du pointeau (2) de soupape située à l'opposé de la surface d'étanchéité (2a).

4. Soupape de sécurité (100) selon la revendication 3, dans laquelle le corps de soupape (1) comprend une surface d'épaulement (18a) qui entoure une extrémité de l'alésage de guidage (10) située à l'opposé du fond (11) de l'alésage de guidage (11) par rapport à la direction radiale (R1), la collerette (31B) du manchon à ressort (31) étant orientée vers la surface d'épaulement (18a) et agencée à distance de cette surface d'épaulement (18a), et la collerette (31B) étant appliquée contre la surface d'épaulement (18a) par le ressort (30) lorsque l'unité de déclenchement (4) s'est affaissée.

5. Soupape de sécurité (100) selon la revendication 3 ou la revendication 4, dans laquelle un diamètre extérieur (d2) de pointeau de soupape (2) et un diamètre intérieur (d31) de manchon de ressort (31) sont dimensionnés de telle sorte que le pointeau de soupape (2) soit apte à être inséré au moins partiellement dans le manchon de ressort (31) lorsque l'unité de déclenchement (4) s'est affaissée.
